(19) Europäisches Patentamt
European Patent Office
Office européen des brevets

(11) **EP 4 708 953 A1**

(12) **EUROPEAN PATENT APPLICATION**

(43) Date of publication:
**11.03.2026  Bulletin 2026/11**

(21) Application number: **25192627.5**

(22) Date of filing: **29.07.2025**

(51) International Patent Classification (IPC):
*H04W 24/06* $^{(2009.01)}$     *H04B 7/0452* $^{(2017.01)}$

(52) Cooperative Patent Classification (CPC):
**H04W 24/06; H04B 7/0452;** H04B 7/0617

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **04.09.2024  US 202418824635**

(71) Applicant: **Viavi Solutions Inc.
Chandler, AZ 85286 (US)**

(72) Inventors:
• **SATTARZADEH HASHEMI, Ata
Guildford, GU1 3NA (GB)**
• **PAYAMI, Sohail
Harlow, CM20 2UB (GB)**
• **LEUNG, Chi-ming
Hardwick, CB23 7XL (GB)**
• **WANG, Stephen
London, SW6 6NG (GB)**
• **BABAR, Zunaira
Hitchin, SG4 9FJ (GB)**

(74) Representative: **Murgitroyd & Company
165-169 Scotland Street
Glasgow G5 8PL (GB)**

(54) **CREATING CHANNELS FOR NETWORK TESTING USING NETWORK BEAM INFORMATION**

(57)      In some implementations, a network test device may identify a beam pattern associated with a gNodeB. The network test device may select, from the beam pattern, a first location, wherein the first location is associated with a first layer of a user equipment (UE). The network test device may select, based on the beam pattern, a second location associated with a second layer of the UE, wherein the second location is selected from a set of candidate locations associated with the first layer. The network test device may create one or more multiple-input multiple-output (MIMO) channels based on selected layers. The network test device may use the one or more MIMO channels to test a multiple user MIMO (MU-MIMO) system in a simulation or emulation environment.

900

910 — Identify, by a network test device, a beam pattern associated with a gNodeB

920 — Select, by the network test device and from the beam pattern, a first location, wherein the first location is associated with a first layer of a user equipment (UE)

930 — Select, by the network test device and based on the beam pattern, a second location associated with a second layer for the UE, wherein the second location is selected from a set of candidate locations associated with the first layer

940 — Create, using the network test device, one or more multiple-input multiple-output (MIMO) channels based on selected layers

950 — Use, by the network test device, the one or more MIMO channels to test a multiple user MIMO (MU-MIMO) system in a simulation or emulation environment

**FIG. 9**

EP 4 708 953 A1

## Description

FIELD

This disclosure relates to a method, network test device and non-transitory computer-readable medium for creating channels for network testing using network beam information.

BACKGROUND

A network test device may be used by network equipment manufacturers for function, system integration, capacity, and stress testing and emulation of a plurality of mobile devices, across multiple cells, to set up and test network nodes. A network node may be associated with a multi-user multiple-input multiple-output (MU-MIMO) system, which may be a Fourth Generation (4G) system, a Fifth Generation (5G) system, a Sixth Generation (6G) system, and so on. A network test device may deliver voice, data, realistic mobility models, and radio access network and/or physical layer side emulation, thereby providing a comprehensive validation solution. A network test device may ensure that users in a network are obtaining adequate quality of service. A network test device may ensure that the network is satisfying latency and round-trip-time requirements for voice- and time-critical applications.

SUMMARY

According to an aspect, there is provided a method, comprising:

identifying, by a network test device, a beam pattern associated with a gNodeB;
selecting, by the network test device and from the beam pattern, a first location, wherein the first location is associated with a first layer of a user equipment, UE;
selecting, by the network test device and based on the beam pattern, a second location associated with a second layer of the UE, wherein the second location is selected from a set of candidate locations associated with the first layer;
creating, using the network test device, one or more multiple-input multiple-output, MIMO, channels based on selected layers; and
using, by the network test device, the one or more MIMO channels to test a multiple user MIMO, MU-MIMO, system in a simulation or emulation environment.

In one embodiment, the first location is an initial random location.
In one embodiment, selecting the second location is based on one or more criteria, and wherein the one or more criteria include one or more of an average signal-to-interference-plus-noise ratio, SINR, a minimum SINR, or a channel condition number.
In one embodiment, the second location is selected to minimize an interference with the first location.
In one embodiment, one or more layers are identified in a sequential manner for each of a plurality of UEs.
In one embodiment, first layers are identified for each of a plurality of UEs, and second layers are subsequently identified for each of the plurality of UEs.
In one embodiment, selecting the second location is based on a shift in one dimension from the first location, and wherein the second location is within a threshold distance from the first location.
In one embodiment, creating the one or more MIMO channels is based on a number of UEs, a polarization, and a number of layers per polarization for a given UE.
According to another aspect, there is provided a non-transitory computer-readable medium storing a set of instructions, the set of instructions comprising:
one or more instructions that, when executed by one or more processors of a network test device, cause the network test device to perform the method set out above.
According to a further aspect, there is provided a network test device, comprising:
one or more components configured to:

identify a beam pattern associated with a gNodeB;
select, from the beam pattern, a first location, wherein the first location is associated with a first layer of a user equipment, UE;
select, based on the beam pattern, a second location associated with a second layer of the UE, wherein the second location is selected from a set of candidate locations that correspond to the first layer;
create one or more multiple-input multiple-output, MIMO channels based on the first layer and the second layer; and
use the one or more MIMO channels to test a multiple user MIMO, MU-MIMO, system in a simulation or emulation environment.

In one embodiment, the first location is an initial random location.

In one embodiment, the one or more components are configured to select the second location based on one or more criteria, and wherein the one or more criteria include one or more of an average signal-to-interference-plus-noise ratio, SINR, a minimum SINR, or a channel condition number.

In one embodiment, the second location is selected to minimize an interference with the first location.

In one embodiment, the one or more components are configured to identify one or more layers in a sequential manner for each of a plurality of UEs.

In one embodiment, the one or more components are configured to identify first layers for each of a plurality of UEs and subsequently identify second layers for each of the plurality of UEs.

In one embodiment, the one or more components are configured to select the second location based on a shift in one dimension from the first location, wherein the second location is within a threshold distance from the first location.

In one embodiment, the one or more components are configured to to create the one or more MIMO channels based on a number of UEs, a polarization, and a number of layers per polarization for a given UE.

BRIEF DESCRIPTION OF THE DRAWINGS

Fig. 1 is a diagram of an example associated with a MU-MIMO system in an open-loop test system.

Fig. 2 is a diagram of an example associated with creating channels for network testing using network beam information.

Fig. 3 is a diagram of an example associated with a beam pattern representation in a discrete Fourier transform (DFT) domain.

Fig. 4 is a diagram of an example associated with locations for next layers and UEs.

Fig. 5 is a diagram of an example associated with a sample output of a first algorithm.

Fig. 6 is a diagram of an example associated with a sample output of a second algorithm.

Fig. 7 is a diagram of an example environment in which systems and/or methods described herein may be implemented.

Fig. 8 is a diagram of example components of one or more devices of Fig. 7.

Fig. 9 is a flowchart of an example process relating to creating channels for network testing using network beam information.

DETAILED DESCRIPTION

The following detailed description of example implementations refers to the accompanying drawings. The same reference numbers in different drawings may identify the same or similar elements.

A network test device may be used by network equipment manufacturers for function, system integration, capacity, and stress testing and emulation of a plurality of mobile devices, across multiple cells, to set up and test network nodes. The network test device may deliver voice, data, realistic mobility models, and radio access network and/or physical layer side emulation, thereby providing a comprehensive validation solution.

In a wireless communication system, such as a MU-MIMO system, radio propagation channels may heavily impact system performance metrics, such as signal-to-interference-plus-noise ratio (SINR), throughput, and/or block error rate (BLER). By using the network test device, specific channel conditions may be created to evaluate or test the MU-MIMO system. For example, to test whether the MU-MIMO system is able to achieve a maximum throughput, propagation channels may be ensured to allow such data rates. Designing such propagation channels may be a non-trivial, computationally-heavy, and/or time-consuming task. During the test of the MU-MIMO system, UEs may be placed at optimal angles to create propagation channels which allow for such throughputs. Identifying the optimal angles for the UEs may be a mathematically complex task due to several sources of error and noise, such as calibration error and performance drift due to temperature. Adaptations to system changes by the UEs and/or network nodes, such as gNodeBs, may add additional complexity when the optimal angles for the UEs are identified. Blindly adjusting UE positions to optimize the throughput may be a tedious and time-consuming task. Thus, when the MU-MIMO system is tested using existing techniques, an overall system performance of the network test device may be degraded.

In some implementations, in a MU-MIMO system in an open-loop test system, a network test device may use an open-loop optimization approach for creating MIMO channels based at least in part on gNodeB beams in MU-MIMO tests. Directional channels may be created in the MU-MIMO system in the open-loop test system, which may be useful for a broad set of applications, such as for testing MU-MIMO systems. MU-MIMO channels may be created using a first algorithm or a second algorithm. The first algorithm may utilize information on prior beam patterns used at a gNodeB side. Assuming that a gNodeB is likely to assign a beam with a maximum gain to each UE, each UE may be located so as to maximize an SINR of each layer. The first algorithm may effectively reduce a search space. The first antenna may exploit gNodeB beams and maximize the SINR at receiver antennas for different UEs and layers. The second algorithm may involve deliberately locating different layers associated with each UE that is close to another UE, which may be due to a notion that some level of interference may be mitigated by equalizers at the gNodeB. A location of a first layer may be calculated and then next layers may be added. The second algorithm may exploit the gNodeB beams, and the second algorithm may be used to maximize the SINR. In some implementations, by utilizing gNodeB beam patterns, directional channels may be effectively created for the purpose of testing MU-MIMO systems, thereby improving an overall system performance.

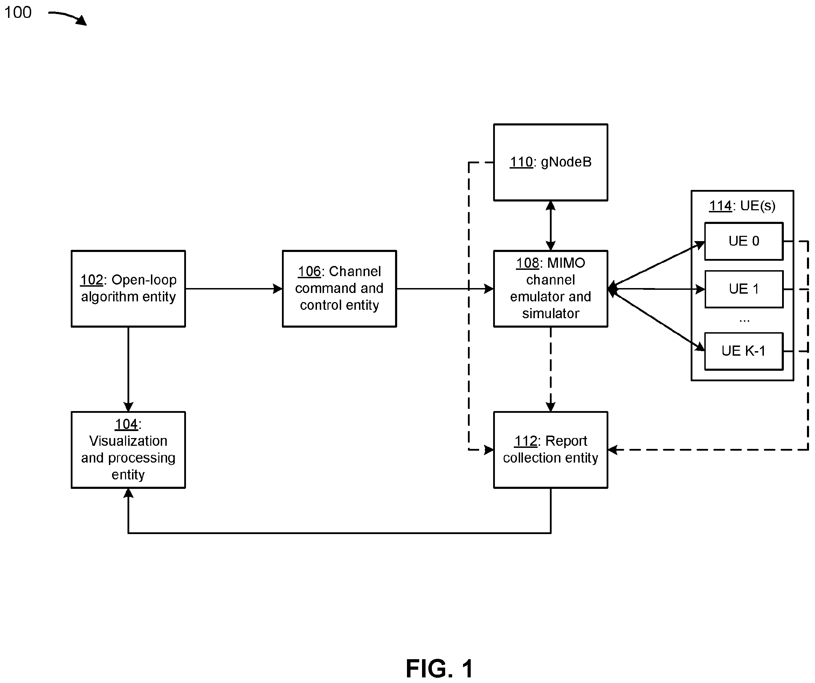

Fig. 1 is a diagram of an example 100 associated with a MU-MIMO system in an open-loop test system.

As shown in Fig. 1, in the MU-MIMO system in the open-loop test system, an open-loop algorithm entity 102 may propose initial UE channels or locations, which may result in a relatively favorable performance. A visualization and processing entity 104 may visualize or further process such locations and other parameters and reports. The open-loop algorithm entity 102 may indicate the initial UE channels or locations to a channel command control entity 106, which may provide the initial UE channels or locations to a MIMO channel emulator and simulator 108. Performance metrics (e.g., a performance/measurement report) by a gNodeB 110 and UE(s) 114 may be sent to a report collection entity 112. The report collection entity 112 may be in connection with other entities in the MU-MIMO system in the open-loop test system, such as the visualization and processing entity 104.

As indicated above, Fig. 1 is provided as an example. Other examples may differ from what is described with regard to Fig. 1.

Regarding an antenna factor and spatial frequency, a downlink scenario may involve $K$ users, where each user has $M$ antennas, and a gNodeB has $N$ antennas. A gNodeB antenna array may be dual polarized and placed on an $x$-$z$ plane. A transmission on one polarization may be repeated for the other polarization. In each polarization, an array may be a rectangular array with $N_x$ antennas with spacing $d_x$ and $N_z$ antennas with $d_z$ on the horizontal and vertical domains. An array response for a received signal $y_{n_x,n_z}(\phi, \theta, t) = y_{0,0}(\phi, \theta, t)\, a_{n_x,n_z}(\phi, \theta)$ at position $(n_x, n_z)$ in a two-dimensional (2D) array may be represented by:

$$a_{n_x,n_z}(\phi, \theta) = e^{j2\pi/\lambda(n_x d_x \sin(\theta)\sin(\phi) + n_z d_z \cos(\theta))},$$

where $n_x \in \{0, N_x - 1\}$, $n_z \in \{0, N_z - 1\}$, t represents a time ($t$ can be dropped for the sake of simplicity of notation), $\lambda$ is a wavelength, and $\theta$ and $\phi$ are an elevation angle (angle from a $z$-axis) and an azimuth angle (angle from an $x$-axis in the $yz$-plane), respectively. A relationship between phase values on a phase shifter matrix and UE locations may also be in accordance with the array response.

Signals can be represented by an array response matrix $A(\phi, \theta)$ where it's elements is generated using $a_{n_x,n_z}(\phi, \theta)$. Instead of using the elevation and azimuth angles, UE locations may be represented using spatial frequency and in a DFT domain. However, other transforms that capture a linear progressive phase effect over the array may be used. Using spatial frequency in antenna array processing may introduce linearity in the manner in which the array's response to signals from different directions is represented and analyzed. Such linearity may arise from a relationship between an array geometry, signal arrival angles, and Fourier transform properties.

Spatial frequencies may be defined as $\omega_x = 2\pi f_x/N_x$ and $\omega_z = 2\pi f_z/N_z$, where normalized spatial frequencies $f_x$ and $f_y$ are continuous and periodic with periodicities $N_x$ and $N_z$, respectively. For the x-axis, $f_x \in \left[-\frac{N_x}{2}, \frac{N_x}{2}\right]$ may be assumed, and the notation for the $y$-axis may be similar. A spatial frequency response of the array is defined by:

$$B(f_x, f_z) = \sum_{n_x=0}^{N_x-1} \sum_{n_z=0}^{N_z-1} a_{n_x,n_z}(\phi, \theta) e^{-j2\pi(n_x f_x/N_x + n_z f_z/N_z)},$$

which may be used for any array excitation and beam parameters $a_{n_x,n_z}$.

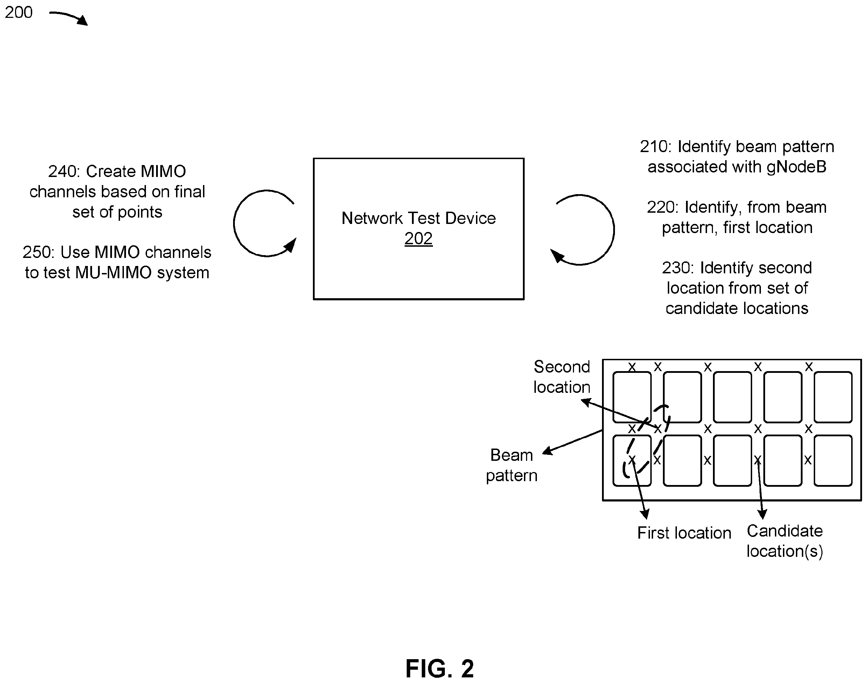

Fig. 2 is a diagram of an example 200 associated with creating channels for network testing using network beam information. The example 200 includes a network test device 202.

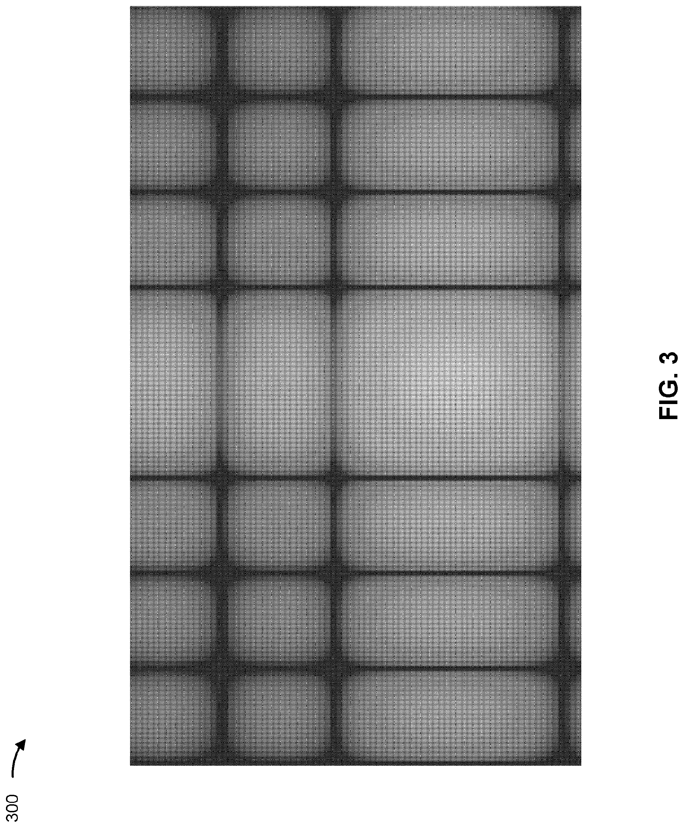

As shown by reference number 210, the network test device 202 may identify a beam pattern associated with a gNodeB. The network test device may use information on prior beam patterns used by the gNodeB. The beam pattern may be associated with a DFT domain. Nulls may be linearly positioned relative to a main beam, in accordance with the beam pattern. An example of the beam pattern is shown in Fig. 3.

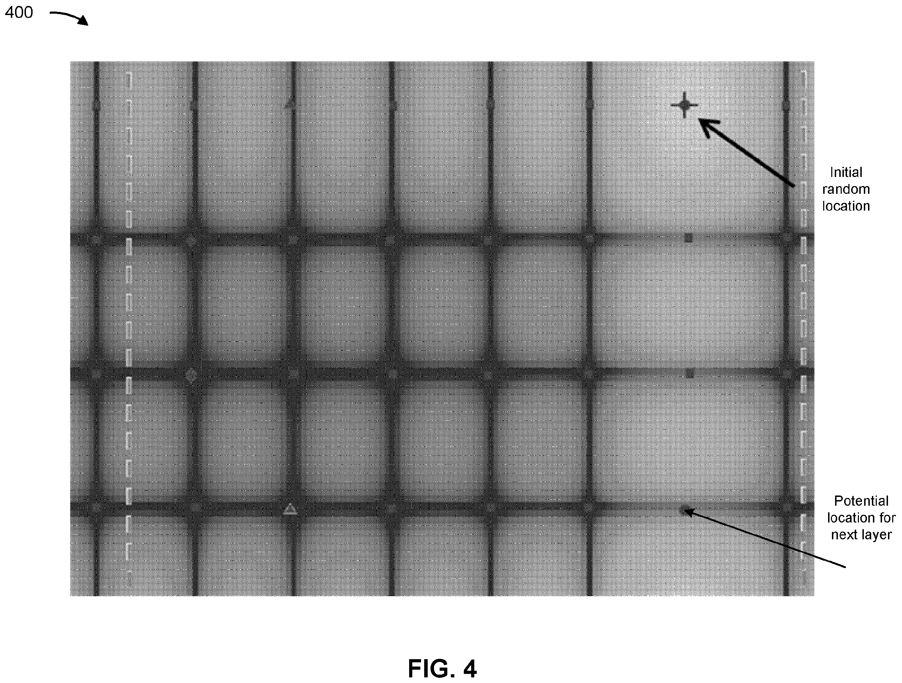

As shown by reference number 220, the network test device 202 may select, from the beam pattern, a first location. The first location may be associated with a first layer (e.g., a transmit layer or transmission layer) of a UE. The first location may be an initial random location. The first location may be of the first layer of the UE, such as a first UE. An example of the first location is shown in Fig. 4.

As shown by reference number 230, the network test device 202 may identify, based on the beam pattern, a second location associated with a second layer of the UE. The network test device 202 may identify the second location from a set of candidate locations associated with the beam pattern. An example of the set of candidate locations is shown in Fig. 4. The set of candidate locations may correspond to the first layer. The network test device 202 may identify the second location based on one or more criteria. The one or more criteria may include an average SINR, a minimum SINR, an average or minimum SINR after equalization, and/or a channel condition number. The network test device 202 may identify the second location so as to minimize an interference with the first location. The network test device 202 may identify the second location based on a shift in one dimension from the first location, where the second location may be within a threshold distance from the first location.

In some implementations, the network test device 202 may identify one or more layers in a sequential manner for each of a plurality of UEs. The network test device 202 may identify the one or more layers in the sequential manner in accordance with a first algorithm. Alternatively, the network test device 202 may identify first layers for each of a plurality of UEs, and the network test device 202 may subsequently identify second layers for each of the plurality of UEs. The network test device 202 may identify the first layers and the second layers in accordance with a second algorithm.

In some implementations, the network test device 202 may utilize the first algorithm or the second algorithm for creating MU-MIMO channels, where both the first algorithm and the second algorithm may utilize gNodeB beam information.

In some implementations, the first algorithm may rely on beam patterns used at the gNodeB. The network test device 202 may examine the beam patterns in the DFT domain. The network test device 202 may calculate the beam patterns at locations of steering vectors generated by DFT phase shifts. In other words, the network test device 202 may apply a 2D DFT on a phase and an amplitude of an array. The network test device 202 may analyze the beam patterns in the DFT domain since many beamforming coefficients used at the gNodeB are already generated using DFT matrices.

In some implementations, in the beam pattern in the DFT domain (e.g., as shown in Fig. 3), nulls may be linearly positioned relative to the main beam. When a main beam's location is known or is able to be calculated, the nulls' positions may also be determined by adding or subtracting integer values. Such a property may be derived from analyzing the beam patterns in the DFT domain rather than in theta-phi ($\theta, \phi$) or other physical domains. The property may be exploited to significantly reduce the algorithm's search space. Starting with a random location, the network test device 202 may attempt to find a beam with a maximum gain in that direction, which is likely the same approach taken by the gNodeB. The network test device 202 may apply additional constraints to a first UE's location, such as avoiding edges. When a beam with a maximum gain is found, the network test device 202 may modify the location of the first UE to exactly match a direction of a best beam. The network test device 202 may generate possible locations for next layers by adding and subtracting integer values to the location.

In some implementations, after the network test device 202 identifies optimal locations for other UEs (layers), a search region may become limited. To add a next layer, the network test device 202 may iterate through candidate locations and select a candidate location that leads to a best average performance. The network test device 202 may determine a best location based at least in part on one or more of various criteria, such as an average SINR, a minimum SINR, and/or a channel condition number. For example, the network test device 202 may use the average SINR to select the next layer. Once a location is fixed, the network test device 202 may select a subsequent location so as to minimize an interference with previously selected locations.

In some implementations, a set of candidate locations for a next layer may be represented as , and an SINR for an $l$-th layer of user $k$ after selecting an $i$th point as a location for the next layer may be represented by:

$$\mathrm{SINR}_{k,l} = \frac{P_{k,l}\left|h_{k,l}^{H}w_{k,l}\right|^2}{\underbrace{\sum_{j\neq k}\sum_{m=1}^{L_j}P_{j,m}\left|h_{k,l}^{H}w_{j,m}\right|^2}_{\text{Inter-UE Interference}} + \underbrace{\sum_{\substack{m\neq l \\ m\in\{1,\ldots,L_k\}}}P_{k,m}\left|h_{k,l}^{H}w_{k,m}\right|^2}_{\text{Intra-UE Interference}} + \sigma^2},$$

where $L_k$ is a number of layers for user $k$, $\mathbf{h}_{k,l}$ is a channel vector for the $l$-th layer of user $k$, $\mathbf{w}_{k,l}$ is a beamforming vector for the $l$-th layer of user $k$, $P_{k,l}$ is a power allocated to the $l$-th layer of user $k$, and $\sigma^2$ is a noise power. A power allocation may be uniform between all layers, and the beamforming vector $\mathbf{w}_{k,l}$ may be derived from available beamforming vector sets. When no predefined beamforming vector sets are present, such beamforming vector sets may be generated.

In some implementations, the network test device 202, in order to calculate the expected $\mathrm{SINR}_{k,l}$ after selecting each layer, may consider an error distribution of a beamforming network. A channel $\mathbf{h}_{k,l}$ may be implemented using a phase shifter network, such that a quantization error and any other uncertainty may affect results. The network test device 202 may model each phase value with an additive component that encapsulates uncertainties as follows:

$$\varphi_n \to \varphi_n^q + e.$$

The network test device 202, for each phase value for the channel elements $\varphi_n$, may replace the phase value with its quantized version $\varphi_n^q$ and add a noise e with a uniform or normal distribution with a known variance. The network test device 202, to calculate the expected SINR for a selected location for the next layer, may calculate an expectation of $SINR_{k,l}$ for different realizations of phase error for $\mathbf{h}_{k,l}$.

In some implementations, the network test device 202 may add the next layer. The network test device 202 may add layers in a sequential manner beginning from a first layer for each UE and then adding next layers for each UE. The network test device 202 may select a location for the next layer as:

$$\max_{i \in \mathcal{L}} \min \mathrm{E}\{SINR_{k,l}\},$$

where $k$ and $l$ may be related to users and layers that have already been selected, plus the SINR (or other criteria) at the $i$-th location, which may be added in this stage.

In some implementations, in an initial phase of the first algorithm, the network test device 202 may not distinguish between inter-UE interference and intra-UE interference, such that inter-UE interference and intra-UE interference may be treated equivalently. The network test device 202 may select all layers in a null of assigned beams. All layers may be designed to be orthogonal to each other, which may eliminate any significant difference between interference originating from the same UE or from different UEs. An equalization may have a negligible system impact and may be disregarded.

In some implementations, in a later phase of the first algorithm, the network test device 202 may identify locations for all layers by selecting locations that introduce minimum interference on already selected locations and achieve a best average SINR, which may lead to a favorable throughput performance. The network test device 202 may assign multiple layers to each UE by grouping some of the layers to achieve an optimal average SINR for a proposed combination, which may take into account an impact of a system equalizer. The network test device 202 may exhaustively evaluate various layer combinations for the UEs, and the network test device 202 may apply equalization to each combination to identify a best configuration for layers of each UE.

In some implementations, the second algorithm may take into account information resulting from an implementation, such that the second algorithm may apply some modification to the first algorithm. The network test device 202, when using the second algorithm, may keep different layers of a same UE relatively close to each other. The network test device 202 may run the first algorithm for only the first layer of the UEs, and then the network test device 202 may attempt to add another layer relatively close to a previous layer (e.g., only separated in a $y$ direction). The network test device 202, to add a second layer, may utilize different combinations, where the second layer may be a shifted version of the first layer. The second layer may be the shifted version in either a top direction or a down direction (e.g., only the $y$ direction may be searched).

In some implementations, for all possible combinations for the second and higher layers, the network test device 202 may calculate an average system SINR and select a best combination that leads to a maximum throughput. The network test device 202 may calculate the locations of the first layers of all UEs, and then for the second layer, the network test device 202 may check possible locations for second layers and identify a combination with a best total SINR and do the same for other layers in a sequential manner.

As shown by reference number 240, the network test device 202 may create one MIMO channel based on the first layer. The network test device 202 may create more MIMO channels based on the number of UEs, number of polarizations polarization, and the number of layers per polarization for a given UE. The network test device 202 may create multiple MIMO channels for multiple UEs, where each UE may be associated with a certain number of layers per polarization.

As shown by reference number 250, the network test device 202 may use the one or more MIMO channels to test a MU-MIMO system in a simulation environment. The network test device 202, using the one or more MIMO channels, may evaluate whether the MU-MIMO system is able to achieve a maximum throughput. The network test device 202 may create such directional channels within the simulation or emulation environment, where the directional channels may be evaluated in terms of system performance metrics, such as SINR, throughput, and/or BLER.

As indicated above, Fig. 2 is provided as an example. Other examples may differ from what is described with regard to Fig. 2.

Fig. 3 is a diagram of an example 300 associated with a beam pattern representation in a DFT domain.

As shown in Fig. 3, a beam pattern may be in a DFT domain. The beam pattern may be in the DFT domain because many beamforming coefficients used at a gNodeB may already be generated using DFT matrices. In the beam pattern, nulls may be linearly positioned relative to a main beam. When the main beam's location is known or is able to be calculated, the nulls' positions may also be determined by adding or subtracting integer values, which may be possible by analyzing the beam pattern in the DFT domain.

As indicated above, Fig. 3 is provided as an example. Other examples may differ from what is described with regard to Fig. 3.

Fig. 4 is a diagram of an example 400 associated with locations for next layers and UEs.

As shown in Fig. 4, optimal locations for UEs (layers) may be identified by analyzing the available set of beams. There may be limitations for the location of the layers in $x$ or $y$ or both dimensions. An initial random location of a first layer of a first UE and an assigned beam may be defined. Possible locations for subsequent layers may be identified and the limitations maybe applied. In this example, a maximum of 31 potential locations for next layers may be possible. As an example, points that fall outside of the antenna coverage region, such as those with $x > 3.5$ or $x < -3.5$, may be eliminated.

As indicated above, Fig. 4 is provided as an example. Other examples may differ from what is described with regard to Fig. 4.

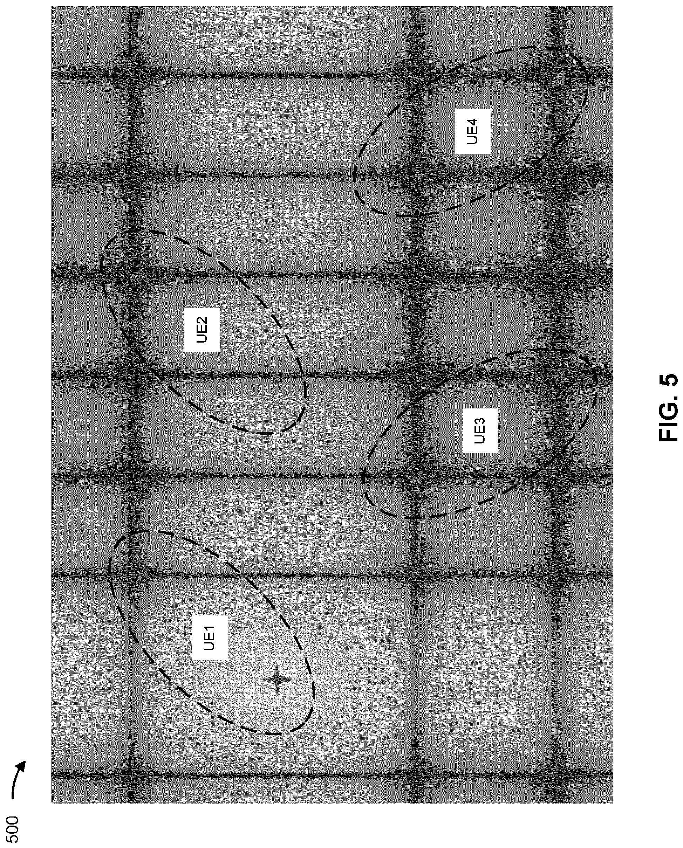

Fig. 5 is a diagram of an example 500 associated with a sample output of a first algorithm.

As shown in Fig. 5, by using the first algorithm, a network test device may identify an initial random location of a first layer of a first UE. The network test device may add, for the first UE, a next layer by iterating through candidate locations. The network test device may then add next layers for each UE. In this example, four UEs, each with four layers, and two polarizations may be defined, such that two layers may need to be assigned for each UE and each polarization.

As indicated above, Fig. 5 is provided as an example. Other examples may differ from what is described with regard to Fig. 5.

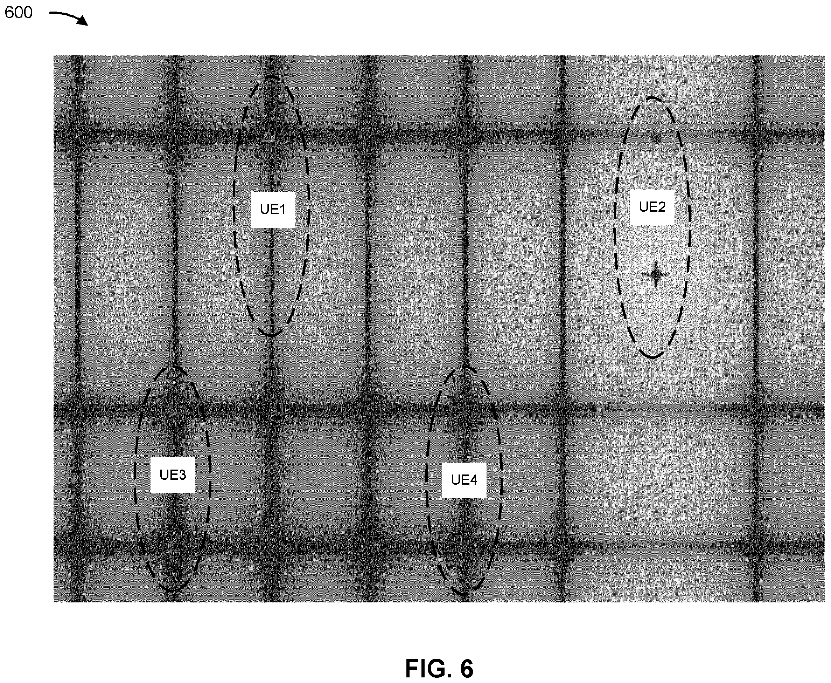

Fig. 6 is a diagram of an example 600 associated with a sample output of a second algorithm.

As shown in Fig. 6, by using the second algorithm, a network test device may identify an initial random location of a first layer of a first UE. The network test device may add first layers for all UEs. The network test device may then add second layers for all UEs. The network test device may add the second layers relatively close to previous layers of the same UE (e.g., only separated in a $y$ direction). In this example, four UEs, each with four layers, and two polarizations may be defined, such that two layers may need to be assigned for each UE and each polarization. This procedure may continue if there are more layers in the system.

As indicated above, Fig. 6 is provided as an example. Other examples may differ from what is described with regard to Fig. 6.

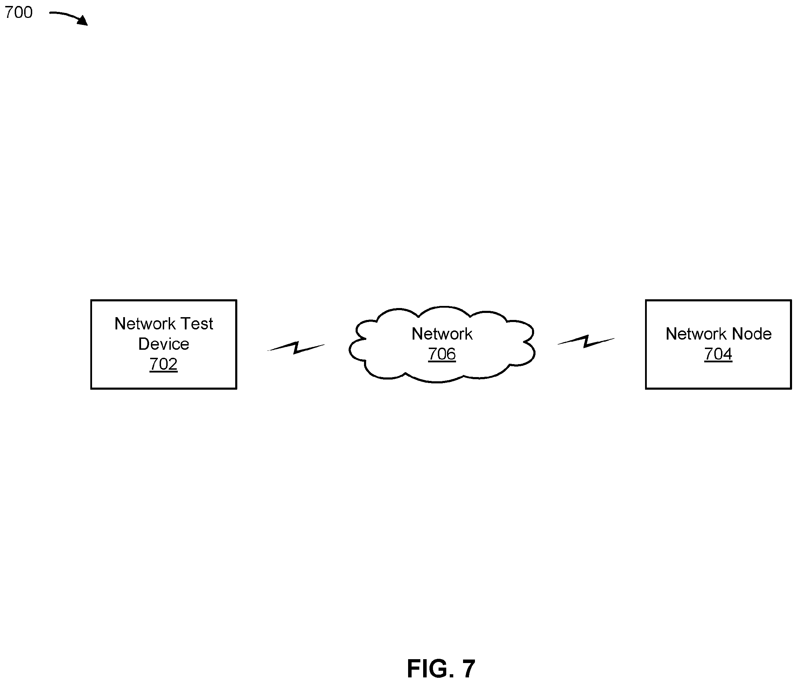

Fig. 7 is a diagram of an example environment 700 in which systems and/or methods described herein may be implemented. As shown in Fig. 7, environment 700 may include a network test device 702, a network node 704, and a network 706. Devices of environment 700 may interconnect via wired connections, wireless connections, or a combination of wired and wireless connections.

The network test device 702 may include one or more devices capable of receiving, processing, storing, routing, and/or providing information associated with calibrating amplitude and phase of a transceiver array in a network test device, as described elsewhere herein. The network test device 702 may include a computing device. The network test device 702 may be used by network equipment manufacturers for function, system integration, capacity, and stress testing and emulation of a plurality of mobile devices, across multiple cells, to set up and test network nodes. The network test device 702 may deliver voice, data, realistic mobility models, and 4G/5G core emulation, thereby providing a comprehensive validation solution. The network test device 702 may ensure that users in a network are obtaining adequate quality of service. The network test device 702 may ensure that the network is satisfying latency and round-trip time requirements for voice and time-critical applications.

The network node 704 may include one or more devices capable of receiving, processing, storing, routing, and/or providing information associated with calibrating amplitude and phase of a transceiver array in a network test device, as described elsewhere herein. The network node 704 may be an aggregated network node, meaning that the aggregated network node is configured to utilize a radio protocol stack that is physically or logically integrated within a single RAN node (e.g., within a single device or unit). The network node 704 may be a disaggregated network node (sometimes referred to as a disaggregated base station), meaning that the network node 704 is configured to utilize a protocol stack that is physically or logically distributed among two or more nodes (such as one or more central units (CUs), one or more distributed units (DUs), or one or more radio units (RUs)). The network node 704 may include, for example, a New Radio (NR) base station, a long-term evolution (LTE) base station, a Node B, an eNB (e.g., in 4G), a gNodeB (e.g., in 5G), an access point, a transmission reception point (TRP), a DU, an RU, a CU, a mobility element of a network, a core network node, a network element, a network equipment, and/or a radio access network (RAN) node.

The network 706 may include one or more wired and/or wireless networks. For example, the network 706 may include a cellular network (e.g., a 6G network, a 5G network, a 4G network, an LTE network, a Third Generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. The network 706 may enable communication among the one or more devices of environment 700.

The number and arrangement of devices and networks shown in Fig. 7 are provided as an example. In practice, there may be additional devices and/or networks, fewer devices and/or networks, different devices and/or networks, or differently arranged devices and/or networks than those shown in Fig. 7. Furthermore, two or more devices shown in Fig. 7 may be implemented within a single device, or a single device shown in Fig. 7 may be implemented as multiple, distributed devices. Additionally, or alternatively, a set of devices (e.g., one or more devices) of environment 700 may perform one or more functions described as being performed by another set of devices of environment 700.

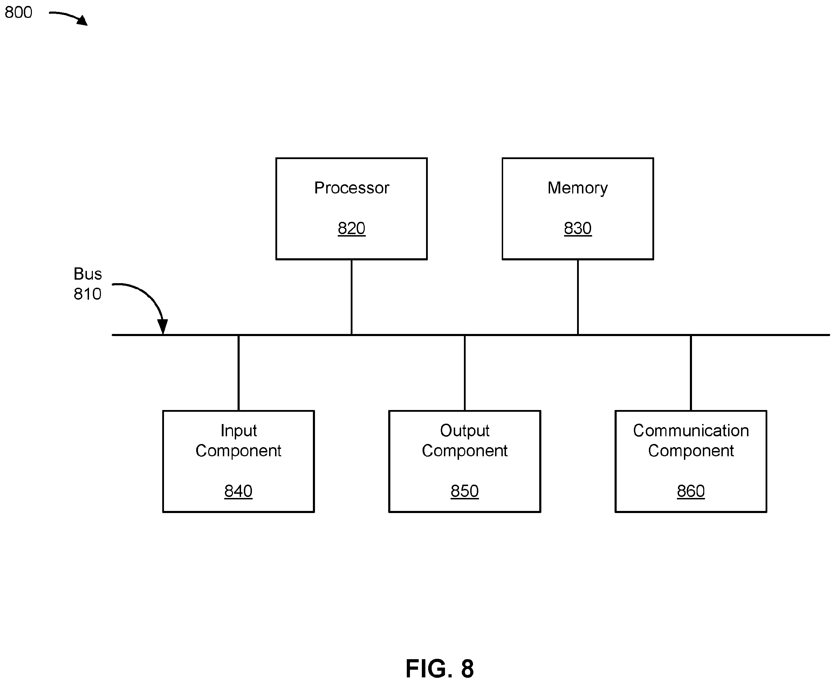

Fig. 8 is a diagram of example components of a device 800 associated with calibrating amplitude and phase of a transceiver array in a network test device. The device 800 may correspond to a network test device (e.g., network test device 202). In some implementations, the device may include one or more devices 800 and/or one or more components of the device 800. As shown in Fig. 8, the device 800 may include a bus 810, a processor 820, a memory 830, an input component 840, an output component 850, and/or a communication component 860.

The bus 810 may include one or more components that enable wired and/or wireless communication among the components of the device 800. The bus 810 may couple together two or more components of Fig. 8, such as via operative coupling, communicative coupling, electronic coupling, and/or electric coupling. For example, the bus 810 may include an electrical connection (e.g., a wire, a trace, and/or a lead) and/or a wireless bus. The processor 820 may include a central processing unit, a graphics processing unit, a microprocessor, a controller, a microcontroller, a digital signal processor, a field-programmable gate array, an application-specific integrated circuit, and/or another type of processing component. The processor 820 may be implemented in hardware, firmware, or a combination of hardware and software. In some implementations, the processor 820 may include one or more processors capable of being programmed to perform one or more operations or processes described elsewhere herein.

The memory 830 may include volatile and/or nonvolatile memory. For example, the memory 830 may include random access memory (RAM), read only memory (ROM), a hard disk drive, and/or another type of memory (e.g., a flash memory, a magnetic memory, and/or an optical memory). The memory 830 may include internal memory (e.g., RAM, ROM, or a hard disk drive) and/or removable memory (e.g., removable via a universal serial bus connection). The memory 830 may be a non-transitory computer-readable medium. The memory 830 may store information, one or more instructions, and/or software (e.g., one or more software applications) related to the operation of the device 800. In some implementations, the memory 830 may include one or more memories that are coupled (e.g., communicatively coupled) to one or more processors (e.g., processor 820), such as via the bus 810. Communicative coupling between a processor 820 and a memory 830 may enable the processor 820 to read and/or process information stored in the memory 830 and/or to store information in the memory 830.

The input component 840 may enable the device 800 to receive input, such as user input and/or sensed input. For example, the input component 840 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 850 may enable the device 800 to provide output, such as via a display, a speaker, and/or a light-emitting diode. The communication component 860 may enable the device 800 to communicate with other devices via a wired connection and/or a wireless connection. For example, the communication component 860 may include a receiver, a transmitter, a transceiver, a modem, a network interface card, and/or an antenna.

The device 800 may perform one or more operations or processes described herein. For example, a non-transitory computer-readable medium (e.g., memory 830) may store a set of instructions (e.g., one or more instructions or code) for execution by the processor 820. The processor 820 may execute the set of instructions to perform one or more operations or processes described herein. In some implementations, execution of the set of instructions, by one or more processors 820, causes the one or more processors 820 and/or the device 800 to perform one or more operations or processes described herein. In some implementations, hardwired circuitry may be used instead of or in combination with the instructions to perform one or more operations or processes described herein. Additionally, or alternatively, the processor 820 may be configured to perform one or more operations or processes described herein. Thus, implementations described herein are not limited to any specific combination of hardware circuitry and software.

The number and arrangement of components shown in Fig. 8 are provided as an example. The device 800 may include additional components, fewer components, different components, or differently arranged components than those shown in Fig. 8. Additionally, or alternatively, a set of components (e.g., one or more components) of the device 800 may perform one or more functions described as being performed by another set of components of the device 800.

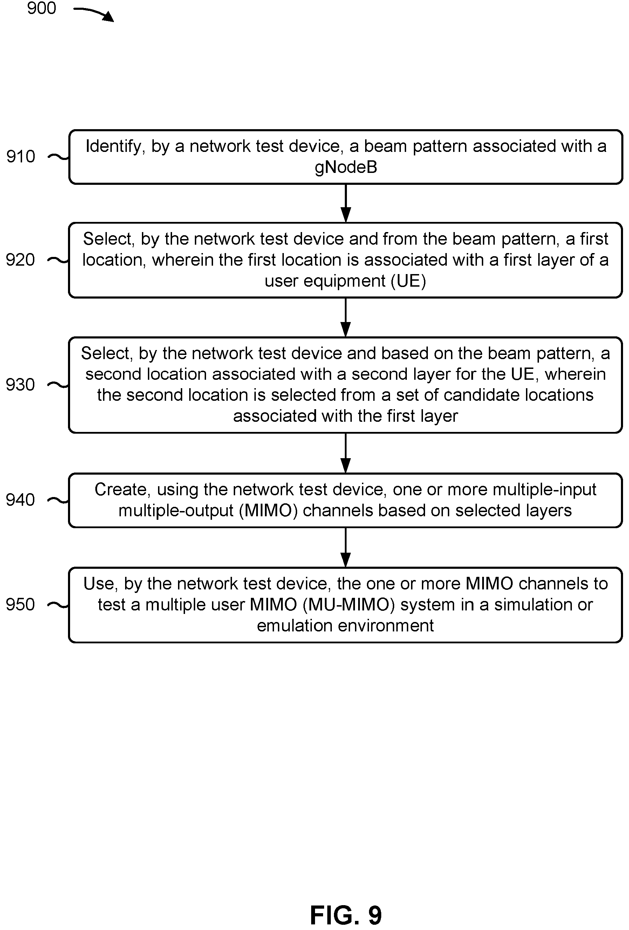

Fig. 9 is a flowchart of an example process 900 associated with creating channels for network testing using network beam information. In some implementations, one or more process blocks of Fig. 9 may be performed by a network test device (e.g., network test device 202). Additionally, or alternatively, one or more process blocks of Fig. 9 may be performed by one or more components of device 800, such as processor 820, memory 830, input component 840, output component 850, and/or communication component 860.

As shown in Fig. 9, process 900 may include identifying, by the network test device, a beam pattern associated with a gNodeB (block 910). The network test device may use information on prior beam patterns used by the gNodeB.

As shown in Fig. 9, process 900 may include selecting, by the network test device and from the beam pattern, a first location, wherein the first location is associated with a first layer of a UE (block 920). The first location may be an initial random location.

As shown in Fig. 9, process 900 may include selected, by the network test device and based on the beam pattern, a second location associated with a second layer of the UE, wherein the second location is selected from a set of candidate locations that correspond to the first layer (block 930). The network test device may select the second location based on a beam pattern associated with the first layer. The network test device select identify the second location based on one or more criteria. The one or more criteria may include an average SINR, a minimum SINR, and/or a channel condition number. The network test device may select the second location to minimize an interference with the first location. The network test device may select the second location based on a shift in one dimension from the first location, where the second location may be within a threshold distance from the first location.

In some implementations, the network test device may identify one or more layers in a sequential manner for each of a plurality of UEs. Alternatively, the network test device may identify first layers for each of a plurality of UEs, and the network test device may subsequently identify second layers for each of the plurality of UEs.

As shown in Fig. 9, process 900 may include creating, using the network test device, one or more MIMO channels based on selected layers, which may include the first layer and the second layer (block 940). The network test device may create the one or more MIMO channels based on a number of UEs, a polarization, and a number of layers per polarization for a given UE.

As shown in Fig. 9, process 900 may include using, by the network test device, the one or more MIMO channels to test a MU-MIMO system in a simulation or emulation environment (block 950). The network test device, using the one or more MIMO channels, may evaluate whether the MU-MIMO system is able to achieve a maximum throughput.

Although Fig. 9 shows example blocks of process 900, in some implementations, process 900 may include additional blocks, fewer blocks, different blocks, or differently arranged blocks than those depicted in Fig. 9. Additionally, or alternatively, two or more of the blocks of process 900 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:

   identifying, by a network test device, a beam pattern associated with a gNodeB;
   selecting, by the network test device and from the beam pattern, a first location, wherein the first location is associated with a first layer of a user equipment, UE;
   selecting, by the network test device and based on the beam pattern, a second location associated with a second layer of the UE, wherein the second location is selected from a set of candidate locations associated with the first layer;
   creating, using the network test device, one or more multiple-input multiple-output, MIMO, channels based on selected layers; and
   using, by the network test device, the one or more MIMO channels to test a multiple user MIMO, MU-MIMO, system in a simulation or emulation environment.

2. The method of claim 1, wherein the first location is an initial random location.

3. The method of claim 1 or claim 2, wherein selecting the second location is based on one or more criteria, and wherein the one or more criteria include one or more of an average signal-to-interference-plus-noise ratio, SINR, a minimum SINR, or a channel condition number.

4. The method of any preceding claim, wherein the second location is selected to minimize an interference with the first location.

5. The method of any preceding claim, wherein one or more layers are identified in a sequential manner for each of a plurality of UEs.

6. The method of any preceding claim, wherein first layers are identified for each of a plurality of UEs, and second layers are subsequently identified for each of the plurality of UEs.

7. The method of any preceding claim, wherein selecting the second location is based on a shift in one dimension from the first location, and wherein the second location is within a threshold distance from the first location.

8. The method of any preceding claim, wherein creating the one or more MIMO channels is based on a number of UEs, a polarization, and a number of layers per polarization for a given UE.

9. A non-transitory computer-readable medium storing a set of instructions, the set of instructions comprising:
   one or more instructions that, when executed by one or more processors of a network test device, cause the network test device to perform the method of any preceding claim.

10. A network test device, comprising:
    one or more components configured to:

    identify a beam pattern associated with a gNodeB;
    select, from the beam pattern, a first location, wherein the first location is associated with a first layer of a user equipment, UE;

select, based on the beam pattern, a second location associated with a second layer of the UE, wherein the second location is selected from a set of candidate locations that correspond to the first layer;

create one or more multiple-input multiple-output, MIMO channels based on the first layer and the second layer; and

use the one or more MIMO channels to test a multiple user MIMO, MU-MIMO, system in a simulation or emulation environment.

11. The network test device of claim 10, wherein the first location is an initial random location.

12. The network test device of claim 10 or claim 11, wherein the one or more components are configured to select the second location based on one or more criteria, and wherein the one or more criteria include one or more of an average signal-to-interference-plus-noise ratio, SINR, a minimum SINR, or a channel condition number.

13. The network test device of any of claims 10 to 12, wherein the second location is selected to minimize an interference with the first location.

14. The network test device of any of claims 10 to 13, wherein the one or more components are configured to:

identify one or more layers in a sequential manner for each of a plurality of UEs; and/or

identify first layers for each of a plurality of UEs and subsequently identify second layers for each of the plurality of UEs.

15. The network test device of any of claims 10 to 14, wherein the one or more components are configured:

to select the second location based on a shift in one dimension from the first location, and wherein the second location is within a threshold distance from the first location; and/or

to create the one or more MIMO channels based on a number of UEs, a polarization, and a number of layers per polarization for a given UE.

FIG. 1

200

240: Create MIMO channels based on final set of points

250: Use MIMO channels to test MU-MIMO system

Network Test Device
202

210: Identify beam pattern associated with gNodeB

220: Identify, from beam pattern, first location

230: Identify second location from set of candidate locations

Second location

Beam pattern

First location    Candidate location(s)

**FIG. 2**

EP 4 708 953 A1

300

FIG. 3

400

Initial
random
location

Potential
location for
next layer

FIG. 4

EP 4 708 953 A1

**FIG. 5**

FIG. 6

700

```
Network Test
   Device
    702
```

Network
706

Network Node
704

**FIG. 7**

EP 4 708 953 A1

800

Processor

820

Memory

830

Bus
810

Input
Component

840

Output
Component

850

Communication
Component

860

**FIG. 8**

900

910 — Identify, by a network test device, a beam pattern associated with a gNodeB

920 — Select, by the network test device and from the beam pattern, a first location, wherein the first location is associated with a first layer of a user equipment (UE)

930 — Select, by the network test device and based on the beam pattern, a second location associated with a second layer for the UE, wherein the second location is selected from a set of candidate locations associated with the first layer

940 — Create, using the network test device, one or more multiple-input multiple-output (MIMO) channels based on selected layers

950 — Use, by the network test device, the one or more MIMO channels to test a multiple user MIMO (MU-MIMO) system in a simulation or emulation environment

**FIG. 9**

Europäisches
Patentamt
European
Patent Office
Office européen
des brevets

# EUROPEAN SEARCH REPORT

**Application Number**

EP 25 19 2627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/209296 A1 (KONG HONG-WEI [CN] ET AL) 2 July 2020 (2020-07-02) * paragraph [0053] - paragraph [0069]; figure 2 * ----- | 1-15 | INV. H04W24/06 ADD. H04B7/0452 |
| A | US 2021/250071 A1 (HAMMOND DAVID [US] ET AL) 12 August 2021 (2021-08-12) * paragraph [0056] - paragraph [0063]; figure 8 * ----- | 1-15 | |
| A | US 2020/322819 A1 (BENDINELLI ENRICO [IT] ET AL) 8 October 2020 (2020-10-08) * paragraph [0031] - paragraph [0037]; figure 5 * ----- | 1-15 | |

**TECHNICAL FIELDS SEARCHED (IPC)**

H04W
H04B

The present search report has been drawn up for all claims

| Place of search | Date of completion of the search | Examiner |
|---|---|---|
| Munich | 7 January 2026 | Lastoria, Gianluca |

EPO FORM 1503 03.82 (P04C01)

## ANNEX TO THE EUROPEAN SEARCH REPORT
## ON EUROPEAN PATENT APPLICATION NO.

EP 25 19 2627

This annex lists the patent family members relating to the patent documents cited in  the above-mentioned European search report.
The members are as contained in the European Patent Office EDP file on
The European Patent Office is in no way liable for these particulars which are merely given for the purpose of information.

07-01-2026

| Patent document cited in search report | Publication date | Patent family member(s) | Publication date |
|---|---|---|---|
| US 2020209296 A1 | 02-07-2020 | CN 111372280 A<br>US 2020209296 A1 | 03-07-2020<br>02-07-2020 |
| US 2021250071 A1 | 12-08-2021 | CN 113258973 A<br>US 2021250071 A1 | 13-08-2021<br>12-08-2021 |
| US 2020322819 A1 | 08-10-2020 | CN 111567079 A<br>DE 112018006728 T5<br>JP 7309719 B2<br>JP 2021509783 A<br>KR 20200102988 A<br>US 2020322819 A1<br>WO 2019130267 A1 | 21-08-2020<br>29-10-2020<br>18-07-2023<br>01-04-2021<br>01-09-2020<br>08-10-2020<br>04-07-2019 |

For more details about this annex : see Official Journal of the European Patent Office, No. 12/82